(19) Europäisches Patentamt / European Patent Office / Office européen des brevets

(11) **EP 3 282 703 A1**

(12) **EUROPEAN PATENT APPLICATION**

(43) Date of publication:
**14.02.2018 Bulletin 2018/07**

(51) Int Cl.:
**H04N 19/176** (2014.01) **H04N 19/126** (2014.01)
**H04N 19/14** (2014.01)

(21) Application number: **16306036.1**

(22) Date of filing: **09.08.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• **GALPIN, Franck
35576 Cesson-Sévigné Cedex (FR)**

• **LELEANNEC, Fabrice
35576 Cesson-Sévigné Cedex (FR)**
• **RACAPE, Fabien
35576 Cesson-Sévigné Cedex (FR)**
• **POIRIER, Tangi
35576 Cesson-Sévigné Cedex (FR)**
• **VIELLARD, Thierry
35576 Cesson-Sévigné Cedex (FR)**
• **URBAN, Fabrice
35576 Cesson-Sévigné Cedex (FR)**

(74) Representative: **Huchet, Anne
TECHNICOLOR
1-5, rue Jeanne d'Arc
92130 Issy-les-Moulineaux (FR)**

(54) **METHOD AND APPARATUS FOR CODING A VIDEO INTO A BITSTREAM**

(57)　A method and an apparatus for encoding an image into a bitstream are disclosed. Said image comprising a set of blocks. For each block of the image, an activity value is computed (10). A set of classes of activity values is constructed (11) based on a number of blocks for each computed activity value and a quantization parameter is assigned (13) to each class. At least one block of said image is coded into said bitstream using a quantization parameter assigned (14) to the class to which the block belongs.

Fig. 1

EP 3 282 703 A1

**Description**

1. Technical field

A method and an apparatus for coding an image into a bitstream are disclosed.

2. Background art

Digital images and video sequence need a lot of resources for storage and transmission and thus image and video compression techniques are needed for reducing bandwidth and storage space.

Video coding schemes are already known, such as HEVC ("High Efficiency Video Coding) or VP9. In such schemes, a video sequence is coded frame by frame. Each frame is decomposed into a set of blocks. In order to reduce the number of bits used for coding each block, such schemes perform lossy coding using a quantization tool. A quantization tool compresses a range of values to a single quantum value. In video compression schemes, such as VP8 or VP9 for instance, adaptive quantization is performed at a block level. The blocks are classified into up to 8 different segments, each segment having its own quantization parameter set. For example, the blocks are classified according to an energy measure computed on the luminance values of the block. However, in such schemes, uniform quantization of the quantizer is performed as the segments are decided using fixed threshold. For a set of 8 segments, the whole range of energy measures is divided into 8 ranges of equal width. Therefore, such a method is not efficient in terms of adaptation of the quantization according to image content. Furthermore, such a method of adaptive quantization performed on a block level may impact a rate control algorithm performed at a group of frames (GOF) level. Indeed, the total rate of a frame coded using an adaptive quantization technique may dramatically change with respect to the total rate of the same frame coded using a non-adaptive quantization technique.

3. Summary

According to an aspect of the present principle, a method for encoding an image into a bitstream is disclosed. Said image comprises a set of blocks. The method comprises the following steps:

- for each block of the image, computing an activity value,
- constructing a set of classes of blocks based on a number of blocks for each computed activity value,
- assigning a quantization parameter to each class,
- coding into said bitstream at least one block of said image using a quantization parameter assigned to the class to which the block belongs.

The present disclosure allows to take into account activity values of blocks for determining quantization parameters to be used for coding a block. A set of classes is constructed by taking into account a number of blocks for each computed activity value, i.e. by taking into account the histogram of activity values for the frame to encode. Thus, the content of the frame to encode is taken into account when constructing the set of classes for quantization.

A class from such a set of classes is defined by a range of activity values. A block is assigned to the class for which its activity value is inside the range of the class. A range of a class defines a width of the class. Such a width corresponds to the distance between the two extreme values of the range. The width could be fixed or variable between classes. The range of the classes could be computed uniformly across the distribution or centered on a central activity value. Such a central activity value could be fixed or computed from the distribution. A fixed central activity value corresponds to an activity value for which a human visual system distinguishes low activity from high activity. Therefore, such a fixed central value may not always correspond to a center of the distribution of activity values.

The activity of a block could be measured by any computation means, for instance by computing energy in the blocks. The higher the activity is in a block, the less quantization artifacts are visible in that block. Therefore, the assignment of quantization parameters to each class takes into account the range of activity values for the set of classes.

According to one embodiment, the constructing step comprises:

- determining a central activity value, said central activity value being a center between a first activity value and a second activity value,
- determining a fixed width for each class depending at least on said first activity value and said second activity value, and
- determining a range of each class from said width and said central value.

According to this embodiment, a central class is determined according to the content of the image to encode and the width of each class is constant, except at the extremities of the activity value distribution. This embodiment allows to distribute the constructed classes according to a center value and thus to adapt the position of the class according to the distribution of the activity values.

According to one embodiment, each class comprises a same number of blocks.

According to this embodiment, the construction of the set of classes is quantile-based. The central class is then deduced from the quantile. For instance, the central value is taken as the median of the distribution of blocks according to activity value.

According to one embodiment, the constructing step comprises:

- determining, for each class of a first subset of classes, a range of activity values depending on a number of blocks having an activity value lower than a central value, each class of said first subset of classes having a same first number of blocks, and
- determining, for each class of a second subset of classes, a range of activity values depending on a number of blocks having an activity value higher than said central value, each class of said second subset of classes having a same second number of blocks.

According to this embodiment, the set of classes is constructed from two subsets of classes located at each side of a central value of the activity values distribution. Such a central value corresponds to an activity value for which a human visual system distinguishes low activity from high activity. Therefore, such a central value may not correspond to a center of the distribution of activity values.

According to one embodiment, the quantization parameter is assigned for at least one part of the classes according to a monotonic increasing function of the activity.

According to a variant, the constructing step comprises:

- determining a last low class from the set of constructed classes, wherein said last low class comprising a low activity value, a class wherein a highest activity value is below the lowest activity value of the last low class is called a very low activity class, and a class wherein a lowest activity value is equal or higher than the higher activity value of the last low class is called a normal activity class,
- for each very low class:

  • determining a new range of activity values depending on the lowest activity value of said last low class and on a width determined from at least a width of a normal activity class,
  • assigning a quantization parameter equal to a quantization parameter of a normal class which is a symmetric class of the very low class with respect to to the last low class.

According to this embodiment, the quantization parameters are adapted for the classes corresponding to very low activity. In such classes, the measured activity may correspond to noise rather than useful block information to be coded. Thus, it is not necessary to use a lot of bits for encoding such blocks. This embodiment allows using higher quantization parameter for such kind of blocks.

According to one embodiment, the number of classes in the set of classes depends on a number of available index parameters coded in a slice header of the frame. Such number of classes may be equal or lower than the number of available index parameters.

An apparatus for encoding an image into a bitstream is disclosed, said image comprising a set of blocks. The apparatus comprises:

- means for computing an activity value for each block of the image,
- means for constructing a set of classes of blocks based on a number of blocks for each computed activity value,
- means for assigning a quantization parameter to each class,
- means for coding into said bitstream at least one block of said image using a quantization parameter assigned to the class to which the block belongs.

In a variant, said apparatus further comprises:

- means for determining a central activity value, said central activity value being a center between a first activity value and a second activity value,
- means for determining a fixed width for each class depending at least on said first activity value and said second activity value, and
- means for determining a range of each class from said width and said central value. In a variant, each class comprises a same number of blocks.

In another variant, the apparatus further comprises:

- means for determining, for each class of a first subset of classes, a width depending on a number of blocks having an activity value lower than a central value, each class of said first subset of classes having a same first number of blocks, and
- means for determining, for each class of a second subset of classes, a width depending on a number of blocks having an activity value higher than said central value, each class of said second subset of classes having a same second number of blocks.

According to one embodiment, the quantization parameter is assigned for at least one part of the classes according to a monotonic increasing function of the activity.
According to one embodiment, said apparatus further comprises:

- means for determining a last low class from the set of constructed classes, wherein said last low class comprising a low activity value, a class wherein a highest activity value is below the lowest activity value of the last low class is called a very low activity class, and a class wherein a lowest activity value is equal or higher than the higher activity value of the last low class is called a normal activity class,
- means for determining, for each very low class, a new range of activity values depending on the lowest activity value of said last low class and on a width determined from at least a width of a normal activity class,
- means for, assigning, for each very low class, a quantization parameter equal to a quantization parameter of a normal class which is a symmetric class of the very low class with respect to the last low class.

The present embodiment also provides a computer readable storage medium having stored thereon instructions for encoding an image according to any one of the embodiments described in the disclosure.
A bitstream representative of a coded image is also disclosed, said bitstream comprising coded data representative of at least one block of said image, wherein said coded data has been obtained by any one of the embodiments disclosed herein.
A non-transitory processor readable medium having stored thereon a bitstream is disclosed wherein the bitstream comprises coded data representative of at least one block of said image, wherein said coded data has been obtained by any one of the embodiments disclosed herein.
According to one implementation, the different steps of the method for encoding an image as described here above are implemented by one or more software programs or software module programs comprising software instructions intended for execution by a data processor of an apparatus for encoding an image, these software instructions being designed to command the execution of the different steps of the methods according to the present principles.
A computer program is also disclosed that is capable of being executed by a computer or by a data processor, this program comprising instructions to command the execution of the steps of a method for encoding an image.
This program can use any programming language whatsoever and be in the form of source code, object code or intermediate code between source code and object code, such as in a partially compiled form or any other desirable form whatsoever.
The information carrier can be any entity or apparatus whatsoever capable of storing the program. For example, the carrier can comprise a storage means such as a ROM, for example a CD ROM or a microelectronic circuit ROM or again a magnetic recording means, for example a floppy disk or a hard disk drive.
Again, the information carrier can be a transmissible carrier such as an electrical or optical signal which can be conveyed via an electrical or optical cable, by radio or by other means. The program according to the present principles can be especially uploaded to an Internet type network.
As an alternative, the information carrier can be an integrated circuit into which the program is incorporated, the circuit being adapted to executing or to being used in the execution of the methods in question.
According to one embodiment, the methods/apparatus may be implemented by means of software and/or hardware components. In this respect, the term "module" or "unit" can correspond in this document equally well to a software component and to a hardware component or to a set of hardware and software components.
A software component corresponds to one or more computer programs, one or more sub-programs of a program or more generally to any element of a program or a piece of software capable of implementing a function or a set of functions as described here below for the module concerned. Such a software component is executed by a data processor of a physical entity (terminal, server, etc.) and is capable of accessing hardware resources of this physical entity (memories, recording media, communications buses, input/output electronic boards, user interfaces, etc.).
In the same way, a hardware component corresponds to any element of a hardware unit capable of implementing a function or a set of functions as described here below for the module concerned. It can be a programmable hardware component or a component with an integrated processor for the execution of software, for example an integrated circuit, a smartcard, a memory card, an electronic board for the execution of firmware, etc.

4. Brief description of the drawings

Figure 1 is a schematic block diagram illustrating an embodiment of the method for encoding an image into a bitstream.
Figures 2A-C are schematic block diagrams illustrating embodiments of the construction of a set of classes of activity values computed for blocks of an image to encode.
Figure 3 is a schematic block diagram illustrating a further embodiment for encoding an image into a bitstream.
Figure 4 is a schematic block diagram illustrating an exemplary video encoding method in which the present principle could be implemented.
Figure 5 is a schematic block diagram illustrating an exemplary video decoding method adapted to decode a bitstream encoded using the present principle.
Figure 6 is a schematic block diagram illustrating an exemplary apparatus for encoding an image into a bitstream.
Figure 7A-C are illustrative histograms illustrating the construction of the set of classes and quantization parameter assignment according to the embodiments for encoding an image into a bitstream disclosed herein.

5. Description of embodiments

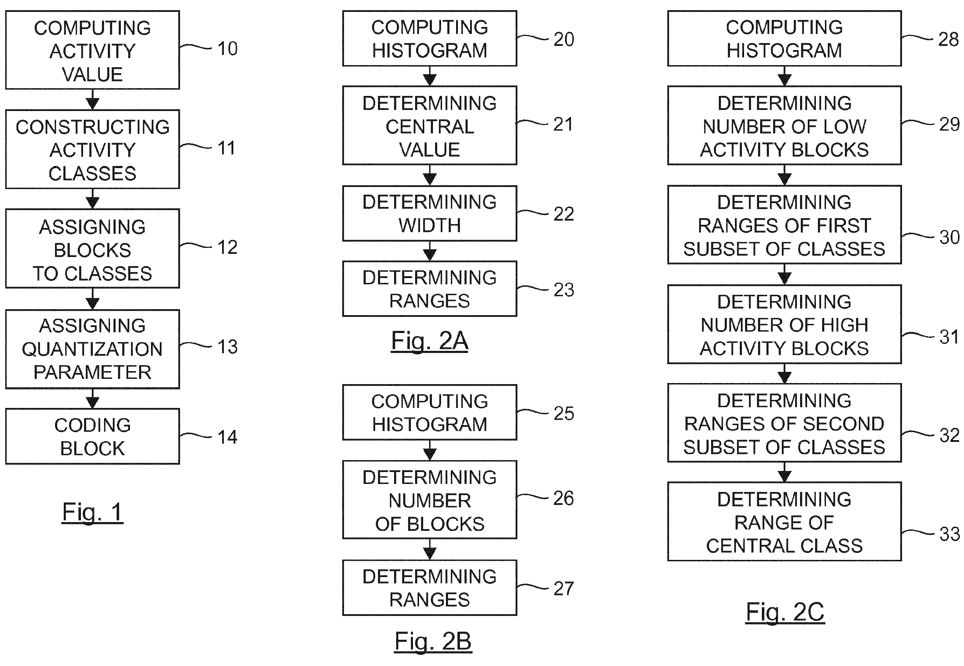

Figure 1 is a schematic block diagram illustrating an embodiment of the method for encoding an image I into a bitstream. The image I could be a single still image, or could be part of a video comprising multiple images to encode. Thus, the present principles also apply to video encoding. The image I is partitioned into a set of blocks. The blocks could be of any size, for instance ranging from size 4x4 pixels to 64x64 pixels or higher.
In a step 10, an activity value is computed for each block of the image.
The activity value could be computed using a spatial activity measure (SAM) coupled to an edge measure (EDM). The SAM measure corresponds to the sum of horizontal and vertical luminance gradients, a gradient being the absolute difference between two consecutive pixels of the image. The SAM measure is thus obtained for a current block b, by the following equation:

$$SAM(x,y) = \frac{\sum_{i=0}^{W-2}\sum_{j=0}^{H-1}|I(i,j)-I(i+1,j)| + \sum_{i=0}^{W-1}\sum_{j=0}^{H-2}|I(i,j)-I(i,j+1)|}{(H-1)\times W + H\times(W-1)},$$

where I is the image signal which is classically the luminance of the image I, but can be extended to other component, e.g. chroma components. x and y represent the position of the top left corner of the current block b in the image I, W and H are respectively the width and height of the current block b.
The EDM measure for the current block b is given by the following equation:

$$EDM(x,y) = \frac{\sum_{j=0}^{H-1} max_{i=0}^{W-2}|I(i,j)-I(i+1,j)| + \sum_{i=0}^{W-1} max_{j=0}^{H-2}|I(i,j)-I(i,j+1)|}{H+W},$$

where I is the image signal which is classically the luminance of the image I, but can be extended to other component, e.g. chroma components. x and y represent the position of the top left corner of the current block b in the image I, W and H are respectively the width and height of the current block b.
When the SAM measure is high, it means that texture activity is high over the region of the block, i.e. there are many differences between neighboring pixels. When EDM is high, there are strong edges in the region of the block.
In both cases, the functions SAM and EDM are respectively normalized by the number of computed differences, which involves that EDM is by nature greater than or equal to SAM. When EDM minus SAM is low, the region of the block contains a high activity but no predominant edges. By setting a threshold on EDM minus SAM, the block comprising strong edges could be distinguish from the blocks comprising flat sub-regions, which are expected to be coded at a high quality. On the other hand, a block comprising high activity that have a low EDM minus SAM is an active noisy region that can be more severely quantized, since quantization artifacts in this block are less visible.
An activity value A for a block b is thus deduced from the SAM and EDM measures computed for the block b by the relation:

$$A = V_s(1 - \alpha \frac{|EDM - SAM|}{EDM}),$$

where $\alpha$ is a fixed weighing parameter and $V_s$ stands for the variance function of the block b.

Alternatively, the activity value A could be deduced by the relation:

$$A = SAM \times (1 - \alpha \frac{|EDM - SAM|}{EDM}),$$

where $\alpha$ is a fixed weighing parameter.

According to another alternative, the activity value for the blocks of the image can be computed using a texture complexity measure (TCM).

Such TCM measure first computes the gradient of the texture of a current block b. For each pixel p in a block b, a neighborhood window is defined, for example a 3x3 pixels neighborhood, centered on the pixel p. Absolute values of gradients with neighbors from the neighborhood window are computed and accumulated for each directions. For instance, for a 3x3 neighborhood, there are 4 directions: an horizontal direction, a vertical direction, and two oblique directions.

The gradient g for a pixel at location (x,y) is computed as:

$$g(x,y) = min_{D \in O}(\sum_{k \in D} |I(k) - I(k+1)|),$$

where (x,y) is the center of the neighbourhood, D is the set of pixels in orientation O, k is the $k^{th}$ pixel on the line D. The gradient g is high if the texture is complex, and low if one direction has no contrast (uniform block, stripes, line, edge...).

Then, the TCM measure for a block is computed by:

$$TCM(x,y) = \frac{\sum_{i=-p}^{N+p-1} \sum_{j=-p}^{M+p-1} g(x+i, y+j)}{(N+2p) \times (M+2p)},$$

where (x,y) is the first pixel of block b of size MxN, p is an integration neighborhood parameter, for instance p=2.

The activity value A of block b is then equal to the TCM measure computed for the block b.

Other methods are possible for computing the activity value of a block b. For example, Canny edge detector with Gaussian filtering can be used or DCT (for Discrete Cosine Transform) transform may be used. Another method for computing activity value of a block is to compute the energy of the block from the value of the pixels of the block, for instance by the average sum of the squared luminance from each pixel of the block.

Once, an activity value $A_b$ has been computed for each block b of the image, in a step 11, a set of classes of activity value is constructed based on a number of blocks for each computed activity value. In step 11, the classes of activity values are constructed by taking into account the number of blocks having a same value of activity value. Step 11 outputs a set $\{C_i\}_{i=0}^{Nb-1}$ of classes, where Nb is the number of classes of the set, for instance Nb equals 7. Each class $C_i$ of the set has a range $]A^i_{min}, N^i_{max}]$ of activity values. Figures 2A-C illustrate embodiments for implementing the step 11 for constructing of the set of classes.

In a step 12, the blocks of the image are assigned to a class $C_i$ depending on the activity value of each block. In step 12, a block b is assigned to a class $C_i$ having a range of activity values $]A^i_{min}, N^i_{max}]$, if the activity value A of the block is comprised in the range $]A^i_{min}, A^i_{max}]$.

In a step 13, a quantization parameter $QP_i$ is assigned to each class $C_i$ of the set of classes. According to an embodiment, for at least one part of the classes of the set, the quantization parameters $QP_i$ are assigned to the classes according to a monotonic increasing function of the activity value. For instance, a fixed set of quantization parameters is provided. Such a set of quantization parameters may be determined as default settings of an image encoder.

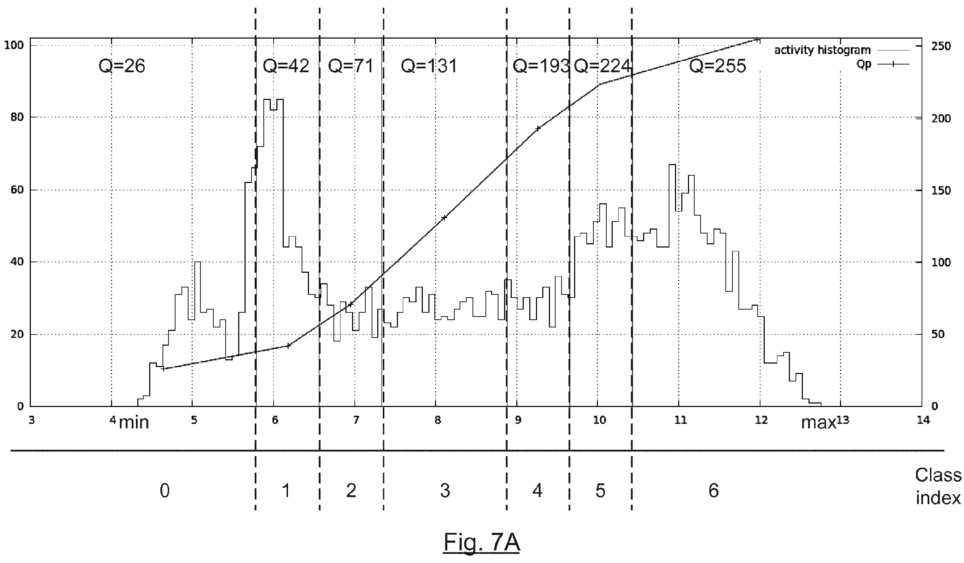

For instance, figure 7A illustrates an histogram of the activity values computed for the image I. The histogram from figure 7A illustrates on the vertical axis the number of blocks for each value of activity (horizontal axis) according to a chosen metric. Here, a set of 7 classes has been used. Ranges of classes as determined in step 11 are also shown with dashed vertical lines and classes index at the bottom of the figure 7A. The assigned QP for each class is also illustrated in figure 7A as a function of activity value. Table 1 summarizes the assignment of quantization parameters for the set of classes as illustrated in figure 7A.

**Table 1**

| Class | 0 | 1 | 2 | 3 | 4 | 5 | 6 |
|-------|---|---|---|---|---|---|---|
| Range | [min, 5.83] | ]5.83, 6.57] | ]6.57, 7.13] | ]7.13, 8.87] | ]8.87, 9.65] | ]9.65, 10.43] | ]10.43, max] |
| QP | 26 | 42 | 71 | 131 | 193 | 224 | 255 |

In table 1, the value "min" may correspond to the minimum activity value computed for a block in the current image or to a value 0, and the value "max" may correspond to the maximum activity value computed for a block in the current image or to 14 for this particular activity function.

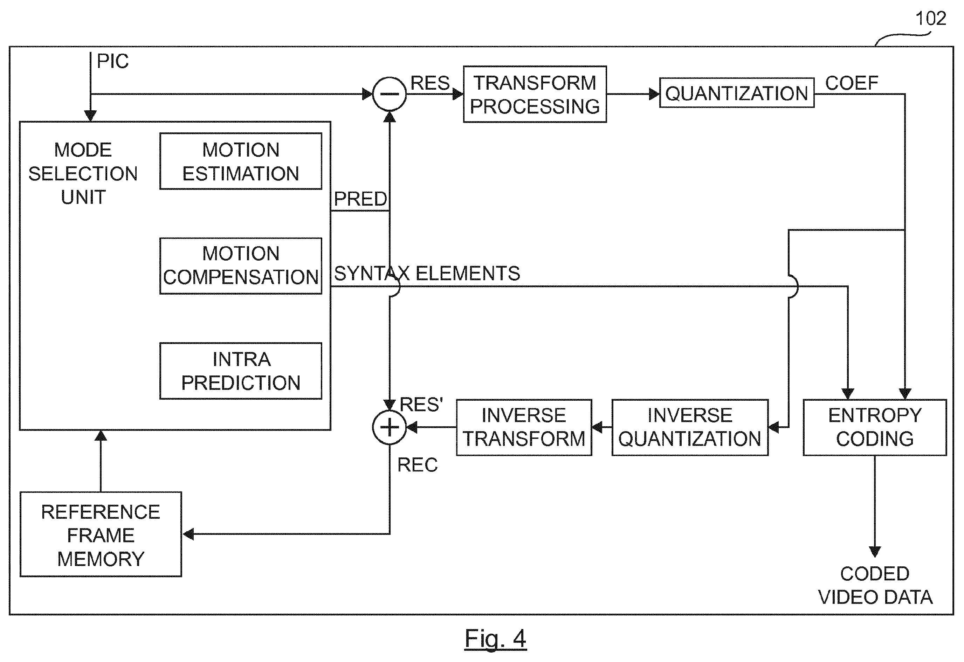

In a step 14, at least one block of the image I is coded using the quantization parameter assigned to the class to which the block belongs. The coding of a block is further described with reference to figure 4.

Step 11 of figure 1 is further described here in relation with figures 2A-C.

Figure 2A illustrates an embodiment for constructing the set of classes of activity values in which a central class is determined according to the content of the image. The content of the image is here represented by the computed activity values for each block of the image.

In a step 20, an histogram of the computed activity values is computed. For that, the number of blocks of the image I having a same value of activity value A is counted. The histogram thus comprises for each activity value computed a number of blocks of the image having a same value of activity value.

In a step 21, a central activity value C from the activity values is determined. Such a central value corresponds here to the center of the distribution. The central activity value is a center between a first activity value L and a second activity value H.

According to an embodiment, such a central activity value C can be computed by determining the center between a first peak L detected from the left side of the histogram and a first peak H detected from the right side of the histogram, using a peak detector for instance. Such a peak detector seeks the value L, respectively H, in the histogram, for which the number of blocks is a local maximum starting from the minimum activity value (from the left side of the curves), respectively maximum (from the right side of the curves), and going to the middle of the activity values.

Alternatively, the central activity value C is determined as being the center between the first x-quantile L and last x-quantile H of the histogram. For instance, x is fixed to 100 so as to get the first 1% and 99% of the histogram.

The central value C is then obtained by: C= L+((H-L)/2). For instance, for L=5,89 and H=10,96, C equals to 8,43.

In a step 22, a fixed width WC for each class is determined. Such a width WC depends at least on the first activity value L and the second activity value H.

The width of the classes is obtained by: WC=max($W_{min}$, (H-L)/(Nb-1)), where $W_{min}$ is a minimal width for a class, Nb is the number of classes of the set, and L and H the first and second activity values used for determining the central activity value C. For instance, $W_{min}$=0,5, and for Nb=7, WC=0,85.

In a step 23, a range of each class is determined from the width WC and the central activity value C.

The range of a class i, i =0 to Nb-1, is obtained as follows using the width WC of each class determined at step 22, and the central class comprising the central value C being defined for an index $i_c$=int(Nb/2), where int() stands for the integer function:

if i equals 0, i.e. for the class having the lowest values of activity in its range, the range of class i is

$$\left[ min, C - \frac{WC}{2} - (i_c - i - 1) \times WC \right],$$

if i higher than 0 and lower or equal to $i_c$, the range of class i is $\left] C - \frac{WC}{2} - (i_c - i) \times WC, C - \frac{WC}{2} - (i_c - i - 1) \times WC \right]$,

if i is higher than $i_c$, and i lower than Nb-1, the range of class i is $\left] C + \frac{WC}{2} + (i - 1 - i_c) \times WC, C + \frac{WC}{2} + (i - i_c) \times WC \right]$,

if i equals Nb-1, i.e. for the class having the highest values of activity in its range, the range of class i is

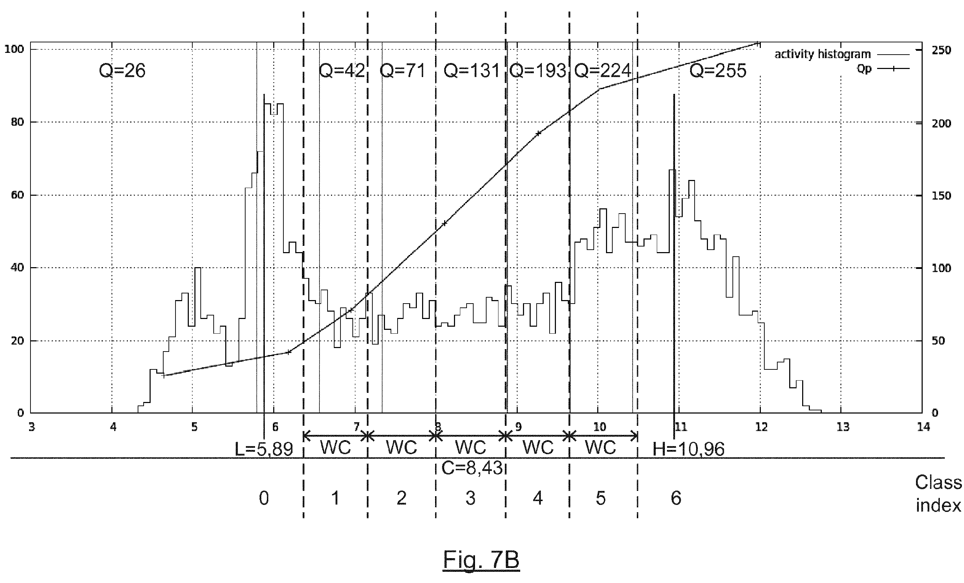

$\left] C + \frac{WC}{2} + \left( i - 1 - \frac{Nb}{2} \right) \times WC, max \right]$. An illustrative example of a set of classes constructed according to this embodiment is disclosed in figure 7B.

This embodiment allows defining the ranges of the classes according to a central value of the activity values distribution in the image to encode. Thus, the classes are determined according to the content of the image to encode. Therefore, when the image is encoded, adaptive quantization based on the content of the image can thus be performed using the determined set of classes.

Figure 2B illustrates an embodiment for constructing the set of classes of activity values in which each class comprises a same number of blocks.

In a step 25, an histogram of the computed activity values is computed. For that, the number of blocks of the image I having a same value of activity value A is counted. The histogram thus comprises for each activity value computed a number of blocks of the image having a same value of activity value.

In a step 26, a number of blocks per class $N_{target}$ is determined using the number Nb of target classes. For instance, if the number Nb of target classes is 7 and the number of blocks in the image is 2040 corresponding to an image of size 1920x1080 pixels divided into blocks of size 32x32 pixels, the number of blocks per class $N_{target}$ is determined as 292.

Such a number of blocks per class $N_{target}$ is determined in order to construct the class using the Nb-quantile of histogram.

In step 27, the ranges of each class are determined so that the number of blocks in each class is approximately 292. The following procedure could be used:

variables $a_{min}$ and $a_{max}$ are first initialized to the extreme activity values computed in the image, respectively to min and max values.

For each class i from 0 to Nb-1: a variable nbb is initialized to 0, and if i is not equal to 0 $a_{min}$ is set to the value of the variable $a_{max}$.

Then for each activity value of a from a = $a_{min}$ to $a_{max}$ and until nbb is lower than $N_{target}$, the number of blocks for the activity value a is accumulated into nbb, i.e. nbb += hist(a), where hist() stands for the value of the histogram for activity value a. When nbb is higher or equals to $N_{target}$, $a_{max}$ is set to the value of a for which nbb passes the threshold $N_{target}$.

The range for class i is thus defined by the values ]$a_{min}$,$a_{max}$].

i is incremented and the range for the next class is determined by repeating the above steps. The ranges of the first class (i=0) and last class (i=Nb-1) are set adapted so as to comprise respectively the lowest activity value (min) and highest activity value (max).

Figure 2C illustrates an embodiment for constructing the set of classes of activity values wherein the set of classes is divided into a first and a second subsets relatively to a central class. The central class is determined as the class comprising a central activity value C. In this embodiment, the central activity value C is predefined by default as corresponding to an activity value for which a human visual system distinguishes low activity from high activity. Such a central activity value C may be determined empirically using a training set of images or video sequence. Therefore, in the present embodiment, such a central activity value may not correspond to a center of the distribution of activity values.

In a step 28, an histogram of the computed activity values is computed. For that, the number of blocks of the image I having a same value of activity value A is counted. The histogram thus comprises for each activity value computed a number of blocks of the image having a same value of activity value. If the number of classes in the set is Nb, thus the number of classes in the first subset, also referred as low activity subset, is set to int(Nb-1)/2, and the number of classes in the second subset, also referred as high activity subset, is set to int(Nb-1)/2. When Nb is even, one more class can be added in the low activity subset or in the high activity subset. In a step 29, a number Now of blocks having a low activity is determined. For that, the number $N_{low}$ is set as the number of blocks for which the activity value is lower than C.

In a step 30, for each class of the first subset of classes, a range of activity values is determined depending on the number $N_{low}$. According to this embodiment, each class of the first subset of classes has a same first number of blocks. The ranges of the classes of the first subset are thus determined using the Nb/2-quantile of histogram. The ranges can thus be determined in a similar way as described in relation with figure 2B for a set of classes corresponding to the first subset, a target number of blocks per class set to $N_{low}$/(Nb/2) and activity values ranging from min to C.

In a step 31, a number $N_{high}$ of blocks having a high activity is determined. For that, the number $N_{high}$ is set as the number of blocks for which the activity value is higher than C.

In a step 32, for each class of the second subset of classes, a range of activity values is determined depending on the number $N_{high}$. According to this embodiment, each class of the second subset of classes has a same second number of blocks. The ranges of the classes of the second subset are thus determined using the Nb/2-quantile of histogram. The ranges can thus be determined in a similar way as described in relation with figure 2B for a set of classes corresponding to the second subset, a target number of blocks per class set to $N_{high}$/(Nb/2) and activity values ranging from C to max.

In a step 33, the range of the central class is determined as having as minimum value, the value $C-(N_{low}/(Nb/2)/2)$, and as maximum value, the value $C+(N_{high}/(Nb/2)/2)$, i.e. the central class width is half the width of the first subset of classes plus half the width of the second subset of classes.

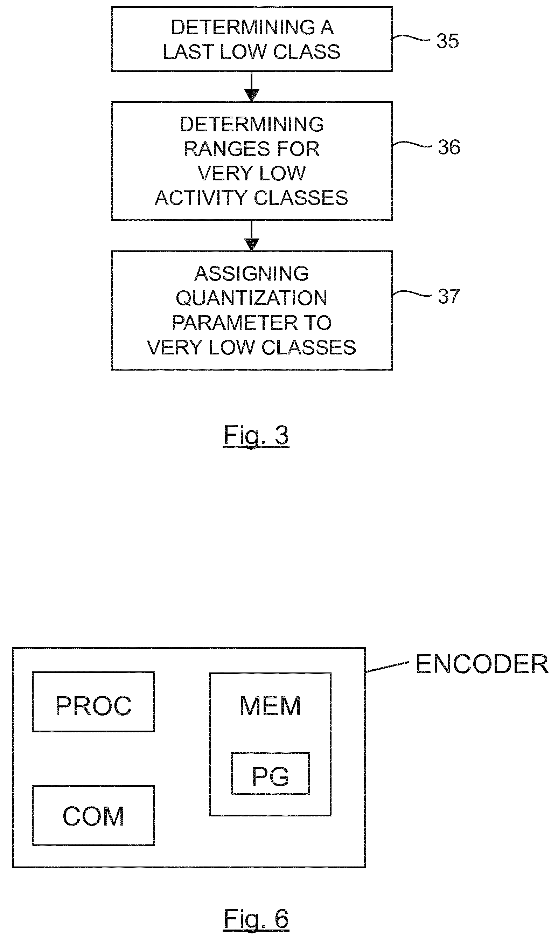

Figure 3 is a schematic block diagram illustrating a further embodiment for encoding an image into a bitstream. According to this embodiment, the quantization parameters are adapted for the classes corresponding to very low activity. In such classes, the measured activity may correspond to noise rather than useful block information to be coded. Thus, it is not necessary to use a lot of bits for encoding such blocks. This embodiment allows using higher quantization parameter for such kind of blocks. A low activity value $a_m$ is set, representing a threshold below which activity values are considered as very low activity value. The perceptual quality for such very low activity values is not completely monotonic and thus the assigned of quantization parameters for these very low activity values should be adapted for better compression efficiency. The present embodiment adapts the classes determined in preceding steps as disclosed in relation with figure 1.

The low activity value $a_m$ can be set by default (determined empirically for example) or determined from the histogram for instance as the first peak of activity value L from the left side of the histogram that is higher than a determined threshold.

The following steps of the present embodiment may be performed subsequent to step 13 of assigning quantization parameter and before step 14 of coding a block, which are described above in relation with figure 1.

In a step 35, a low class $i_{last}$ is determined from the set of classes. Such a low class $i_{last}$ is the class comprising the low activity value $a_m$.

Here, a class whose highest activity value is below the lowest activity value ($a_{min}(i_{last})$) of the low class $i_{last}$ is called a very low activity class, and a class whose lowest activity value is equal or highest than the higher activity value ($a_{max}(i_{last})$) of the low class $i_{last}$ is called a normal activity class.

In a step 36, for each very low class, a new range of activity values is determined depending on the lowest activity value of said low class $i_{last}$ and a width $W_{vlow}$ determined from at least a width $W_n$ of a normal activity class.

For instance, the width $W_{vlow}$ is determined as being equal to an average width computed from the width of the normal classes or to an average width computed from the width of the normal classes which are higher than the central class of the set of classes, or to the width of the central class. Here, width denotes the size of the range of a class and can be computed as $a_{max}-a_{min}$.

The range of a very low class i can thus be determined as:

$$]a_{min}(i_{last}) - W_{vlow} \times (i_{last} - i), a_{min}(i_{last}) - W_{vlow} \times (i_{last} - (i+1))],$$

In a step 37, a new quantization parameter is assigned to each very low class. For each very low class, the new quantization parameter equals to the quantization parameter of the normal class which is the symmetric class of the very low class with respect to the low class $i_{last}$.

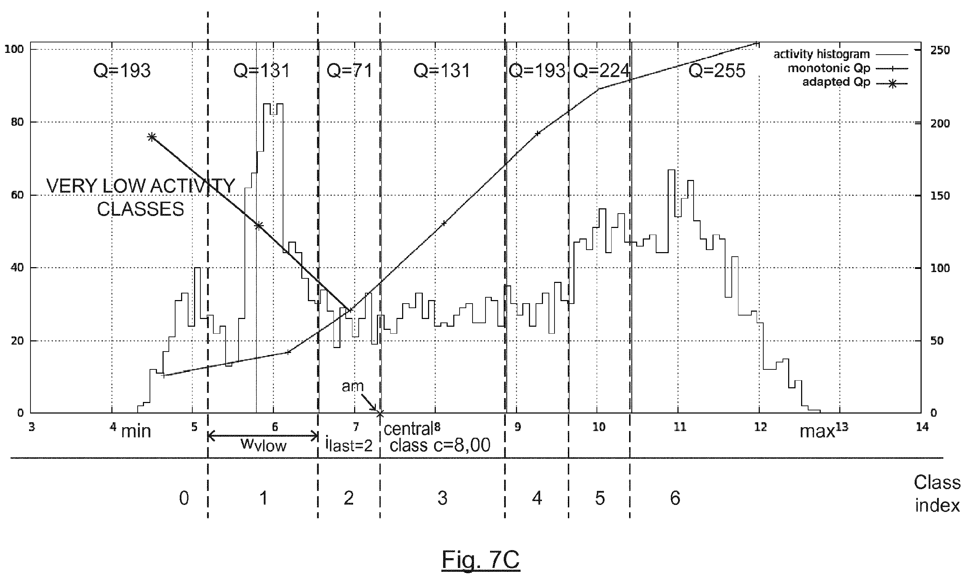

In the example of table 1 given above, if $a_m$ is set to a value of 7.0, the last class is the class with index 2. The very low classes are the classes with index 0 and 1. Quantization parameter for class 0, respectively class 1, is set to the quantization parameter of class 4, respectively 3, as shown in table 2 below. Table 2 also discloses the adapted ranges for very low activity classes as determined in step 36, for a value of $W_{vlow}$ set to 1,38. Figure 7C illustrates the adapted ranges and quantization parameter (Qp) of the set of classes illustrated in figure 7A, according to this embodiment.

**Table 2**

| Class | 0 | 1 | 2 | 3 | 4 | 5 | 6 |
|---|---|---|---|---|---|---|---|
| Range | [min, 5.19] | ]5.19, 6.57] | ]6.57, 7.13] | ]7.13, 8.87] | ]8.87, 9.65] | ]9.65, 10.43] | ]10.43, max] |
| QP | 193 | 131 | 71 | 131 | 193 | 224 | 255 |

Figure 4 is a schematic block diagram illustrating an exemplary video encoder 102 in which the present principle could be implemented. Such a video encoder 102 performs the encoding of a set of pictures of a video into a bitstream according to an embodiment of the present principle. The video encoder 102 performs the encoding of the pictures according to any video coding standards such as H.266, HEVC/H.265, AVC/H.264 or any proprietary video coding system.

Classically, the video encoder 102 may include several modules for block-based video encoding, as illustrated in figure 4. A picture PIC to be encoded is input to the encoder 102. The encoder 102 comprises a mode selection unit for selecting a coding mode for a block of a picture to be coded, e.g. based on a rate/distortion optimization, such a mode selection unit comprising:

- a motion estimation module for estimating motion between one current block of the picture to be coded and reference pictures,
- a motion compensation module for predicting the current block using the estimated motion,
- an intra prediction module for spatially predicting the current block.

The mode selection unit delivers prediction blocks PRED and the corresponding syntax elements to be coded in the bitstream for performing the same block prediction at the decoder. Residual blocks RES are then obtained from the blocks of the picture to be coded and the prediction blocks PRED. The residual blocks RES are transformed by a transform processing module and quantized by a quantization module delivering quantized residual transform coefficients COEF.

In the present disclosure, the residual blocks RES are quantized after transformation using a quantization parameter QP assigned to the blocks as disclosed with figure 1 or 3.

The syntax elements and quantized residual transform coefficients COEF are then inputted to an entropy coding module to deliver coded video data.

The quantized residual transform coefficients COEF are processed by an inverse quantization module and inverse transform module for reconstructing residual blocks RES'. Inverse quantization of coefficients of a block is performed using the quantization parameter QP assigned to the block as disclosed with figure 1 or 3.

Prediction blocks PRED are added to the reconstructed residual blocks RES' for reconstructing blocks forming a reconstructed current picture REC. The reconstructed current picture REC is then added to a reference frame memory for later use as a reference picture for encoding the following pictures of the video content.

The construction of the set of classes and assignment of quantization parameter to the blocks of the image may be performed in a first coding pass of the encoder, before the mode selection unit performs mode selection for a block to be coded or before the picture PIC to encode is input to the encoder 102. The encoder 102, then, uses the quantization parameter assigned in step 13 of figure 1 or step 37 of figure 3 when quantizing the coefficients of a current block to encode.

According to an embodiment, the present principle could be implemented in a video coding standard such as VP9 (VP9 bitstream overview draft-grange-vp9-bitstream-00, A. Grange, H. Alvestrand, Google, February 18, 2013). In such a video coding scheme, a slice header is coded for each picture PIC to encode. Such a slice header comprises segmentation features allowing each block of the picture PIC to specify a segment ID to which it belongs. For instance, coding a segmentation map of the blocks of the picture PIC provides this feature. This segmentation map comprises an index assigned to each block of the picture PIC. For each segment, the slice header conveys common features that are applied to all blocks belonging to the same segment ID. Examples of information that can be conveyed for a segment include: restrictions on the reference frames that can be used for each segment, coefficients skips, quantization parameter, loop filter strength, transform size options.

When the present disclosure is implemented in such a standard, the set of classes and assigned quantization parameters to the blocks of the picture can thus be coded using the segment features. The target number of classes is thus dependent on the number of available segments in the slice header, as other encoding parameters may use such segment features for signaling. The number of classes may be equal or lower than the number of available index parameters.

According to another embodiment, the quantization parameter assigned to each block can be coded in the form of a difference between a default quantization parameter assigned to the picture PIC and the assigned quantization parameter. The default quantization parameter may be coded in the slice header or is known on the decoder side.

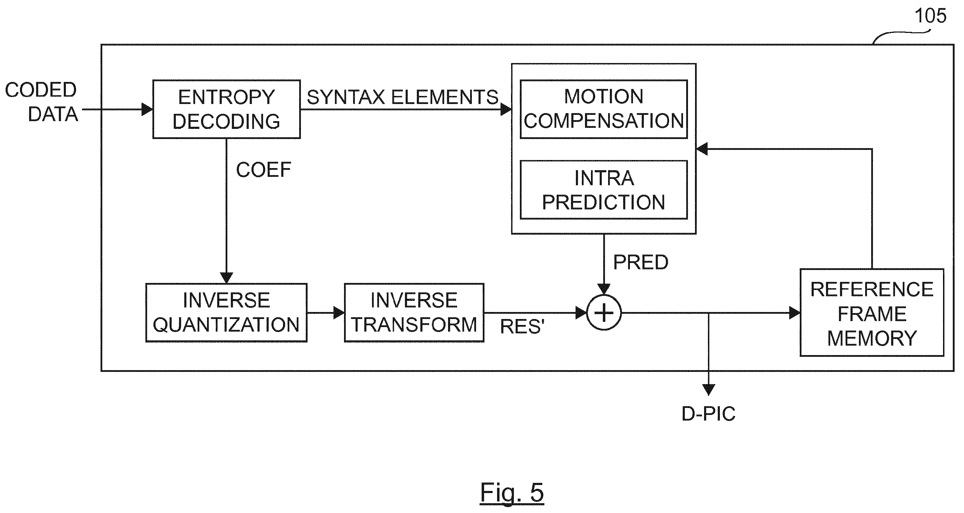

Figure 5 is a schematic block diagram illustrating an exemplary video decoder method adapted to decode a bitstream encoded using the present principle. A bitstream representative of a coded image or video comprises coded data representative of at least one block of said image or video, wherein said block has been coded according to an embodiment of the present disclosure. The bitstream also comprises coded data representative of quantization parameters assigned according to an embodiment of the present disclosure.

The coded data is passed to the video decoding modules of the video decoder 105. As illustrated in figure 5, coded data is passed to an entropy decoding module that performs entropy decoding and delivers quantized coefficients COEF to an inverse quantization module and syntax elements to a prediction module. The inverse quantization module uses the same quantization parameters as those assigned to the blocks in an embodiment of the present disclosure. Such quantization parameters are retrieved by the decoder according to the method used for coding them, by adding a default quantization parameter to a decoded difference from syntax elements coded with the block or by using the segment features coded in the slice header for the segment ID to which the block belongs.

The quantized coefficients COEF are inverse quantized by the inverse quantization module and inverse transformed by an inverse transform module delivering residual blocks data RES'. The prediction module builds prediction blocks PRED according to the syntax element and using a motion compensation module if a current block has been inter-predicted or an intra prediction module if the current block has been spatially predicted. A reconstructed picture D_PIC is obtained by adding prediction blocks PRED and residual blocks RES'. The reconstructed picture D_PIC is added to a reference frame memory for later use as reference frame. The reconstructed picture D_PIC is then outputted by the video decoder 105.

The decoder 105 may be implemented as hardware or software or a combination of hardware and software thereof.

Figure 6 is a schematic block diagram illustrating an exemplary apparatus (ENCODER) for encoding an image into a bitstream according to an embodiment. Such an apparatus for coding a image is configured to implement the method for coding an image according to the present principles which has been described here above in reference with figures 1 to 4. The encoder apparatus of figure 6 may be as an example the encoder 102 as described in figure 4. In the example shown in figure 6, the encoder apparatus comprises a processing unit PROC equipped for example with a processor and driven by a computer program PG stored in a memory MEM and implementing the method for coding an image according to the present principles.

The encoder apparatus ENCODER is configured to:

- compute an activity value for each block of the image,
- construct a set of classes of blocks based on a number of blocks for each computed activity value,
- assign a quantization parameter to each class,
- encode into said bitstream at least one block of said image using a quantization parameter assigned to the class to which the block belongs.

At initialization, the code instructions of the computer program PG are for example loaded into a RAM (not shown) and then executed by the processor of the processing unit PROC. The processor of the processing unit PROC implements the steps of the method for coding an image which has been described here above, according to the instructions of the computer program PG.

Optionally, the encoder apparatus ENCODER comprises a communications unit COM to transmit an encoded bitstream to a decoder.

The encoder apparatus ENCODER also comprises an interface (not shown) for receiving a picture to be coded.

## Claims

1. A method for encoding a block of an image into a bitstream said method comprising:

   - computing (10), for each block of a plurality of blocks of said image, an activity value,
   - constructing (11) a set of classes of blocks based on a number of blocks for each computed activity value,
   - assigning (13) a quantization parameter to each class,
   - coding (14) into said bitstream at least one block of said image using a quantization parameter assigned to the class to which the block belongs.

2. The method for encoding according to claim 1, wherein said constructing comprises:

   - determining a central activity value, said central activity value being a center between a first activity value and a second activity value,
   - determining a fixed width for each class depending at least on said first activity value and said second activity value, and
   - determining a range of each class from said fixed width and said central activity value.

3. The method for encoding according to claim 1, wherein each class comprises a same number of blocks.

4. The method for encoding according to claim 1, wherein said constructing comprises:

   - determining, for each class of a first subset of classes, a range of activity values depending on a number of blocks having an activity value lower than a central activity value, each class of said first subset of classes having a same first number of blocks, and
   - determining, for each class of a second subset of classes, a range of activity values depending on a number of blocks having an activity value higher than said activity central value, each class of said second subset of classes having a same second number of blocks.

5. The method for encoding according to any claims 1 to 4, wherein the quantization parameter is assigned for at least one part of the classes according to a monotonic increasing function of the activity.

6. The method for encoding according to claim 5, wherein said constructing step comprises:

- determining a low class, called last low class, from the set of constructed classes, wherein said last low class comprises a low activity value and wherein a class whose highest activity value is below the lowest activity value of the last low class is called a very low activity class, and wherein a class whose lowest activity value is equal or higher than the highest activity value of the last low class is called a normal activity class,
- determining, for each very low class, a new range of activity values depending on the lowest activity value of said last low class and on a width determined from at least a width of a normal activity class, and
- assigning to each very low class a quantization parameter equal to a quantization parameter of a normal class which is a symmetric class of the very low class with respect to the last low class.

7. The method for encoding an image according to any claims 1 to 6, wherein the number of classes in the set of classes depends on a number of available index parameters coded in a slice header of the frame.

8. An apparatus (ENCODER) for encoding an image into a bitstream, said image comprising a set of blocks, said apparatus comprising:

- means (PROC, MEM, PG) for computing an activity value for each block of the image,
- means (PROC, MEM, PG) for constructing a set of classes of blocks based on a number of blocks for each computed activity value,
- means (PROC, MEM, PG) for assigning a quantization parameter to each class,
- means (PROC, MEM, PG) for coding into said bitstream at least one block of said image using a quantization parameter assigned to the class to which the block belongs.

9. The apparatus for encoding an image according to claim 8, further comprising:

- means for determining a central activity value, said central activity value being a center between a first activity value and a second activity value,
- means for determining a fixed width for each class depending at least on said first activity value and said second activity value, and
- means for determining a range of each class from said width and said central value.

10. The apparatus for encoding an image according to claim 8, wherein each class comprises a same number of blocks.

11. The apparatus for encoding an image according to claim 8, further comprising:

- means for determining, for each class of a first subset of classes, a width depending on a number of blocks having an activity value lower than a central value, each class of said first subset of classes having a same first number of blocks, and
- means for determining, for each class of a second subset of classes, a width depending on a number of blocks having an activity value higher than said central value, each class of said second subset of classes having a same second number of blocks.

12. The apparatus for encoding an image according to any claims 8 to 11, wherein the quantization parameter is assigned for at least one part of the classes according to a monotonic increasing function of the activity.

13. The apparatus for encoding an image according to claim 12, wherein said apparatus further comprises:

- means for determining a last low class from the set of constructed classes, wherein said last low class comprising a low activity value, a class wherein a highest activity value is below the lowest activity value of the last low class is called a very low activity class, and a class wherein a lowest activity value is equal or higher than the higher activity value of the last low class is called a normal activity class,
- means for determining, for each very low class, a new range of activity values depending on the lowest activity value of said last low class and on a width determined from at least a width of a normal activity class,
- means for, assigning, for each very low class, a quantization parameter equal to a quantization parameter of a normal class which is a symmetric class of the very low class with respect to the last low class.

**14.** A computer program comprising software code instructions for performing the method according to any one of claims 1 to 7, when the computer program is executed by a processor.

**15.** A bitstream representative of a coded image comprising:

- coded data representative of at least one block of said image, wherein said coded data has been obtained by the method for encoding according to any one of claims 1 to 7.

COMPUTING ACTIVITY VALUE — 10

CONSTRUCTING ACTIVITY CLASSES — 11

ASSIGNING BLOCKS TO CLASSES — 12

ASSIGNING QUANTIZATION PARAMETER — 13

CODING BLOCK — 14

Fig. 1

COMPUTING HISTOGRAM — 20

DETERMINING CENTRAL VALUE — 21

DETERMINING WIDTH — 22

DETERMINING RANGES — 23

Fig. 2A

COMPUTING HISTOGRAM — 25

DETERMINING NUMBER OF BLOCKS — 26

DETERMINING RANGES — 27

Fig. 2B

COMPUTING HISTOGRAM — 28

DETERMINING NUMBER OF LOW ACTIVITY BLOCKS — 29

DETERMINING RANGES OF FIRST SUBSET OF CLASSES — 30

DETERMINING NUMBER OF HIGH ACTIVITY BLOCKS — 31

DETERMINING RANGES OF SECOND SUBSET OF CLASSES — 32

DETERMINING RANGE OF CENTRAL CLASS — 33

Fig. 2C

EP 3 282 703 A1

DETERMINING A
LAST LOW CLASS ~ 35

DETERMINING
RANGES FOR
VERY LOW
ACTIVITY CLASSES ~ 36

ASSIGNING
QUANTIZATION
PARAMETER TO
VERY LOW CLASSES ~ 37

Fig. 3

PROC

COM

MEM

PG

ENCODER

Fig. 6

_Fig. 4_

EP 3 282 703 A1

Fig. 5

Fig. 7A

Fig. 7B

Fig. 7C

Europäisches
Patentamt

European
Patent Office

Office européen
des brevets

# EUROPEAN SEARCH REPORT

Application Number

EP 16 30 6036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 988 718 A2 (TANDBERG TELEVISION ASA [NO]) 5 November 2008 (2008-11-05) <br> * abstract * <br> * paragraphs [0001] - [0006], [0014], [0020] - [0033] * <br> * figures 1-5 * | 1-15 | INV. <br> H04N19/176 <br> H04N19/126 <br> H04N19/14 |
| X | WO 2010/069366 A1 (ERICSSON TELEFON AB L M [SE]; BOCK ALOIS MARTIN [GB]; SJOBERG RICKARD) 24 June 2010 (2010-06-24) <br> * abstract * <br> * page 1, line 31 - page 2, line 4 * <br> * page 2, line 19 - page 4, line 21 * <br> * page 7, line 4 - page 14, line 7 * <br> * figures 1, 4 * | 1-15 | |
| A | US 6 782 135 B1 (VISCITO ERIC [US] ET AL) 24 August 2004 (2004-08-24) <br> * abstract * <br> * column 5, lines 24-37 * <br> * column 7 - column 8, line 45 * <br> * column 11, line 34 - column 15, line 10 * <br> * figures 4, 6, 10a-h * <br> * claim 1 * | 1-15 | TECHNICAL FIELDS SEARCHED (IPC) <br><br> H04N |
| A | Anonymous: "Data classification methods-ArcGIS Pro ¦ ArcGIS for Desktop", , 10 May 2016 (2016-05-10), XP055344852, Retrieved from the Internet: URL:https://web.archive.org/web/2016051020 2624/http://pro.arcgis.com/en/pro-app/help /mapping/symbols-and-styles/data-classific ation-methods.htm [retrieved on 2017-02-13] * the whole document * | 1-15 | |

The present search report has been drawn up for all claims

| Place of search | Date of completion of the search | Examiner |
|---|---|---|
| The Hague | 13 February 2017 | Mayer, Claudia |

EPO FORM 1503 03.82 (P04C01)

## ANNEX TO THE EUROPEAN SEARCH REPORT
## ON EUROPEAN PATENT APPLICATION NO.

EP 16 30 6036

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2017

| Patent document cited in search report | | Publication date | Patent family member(s) | | Publication date |
|---|---|---|---|---|---|
| EP 1988718 | A2 | 05-11-2008 | CN | 101222631 A | 16-07-2008 |
| | | | EP | 1988718 A2 | 05-11-2008 |
| | | | GB | 2444991 A | 25-06-2008 |
| | | | US | 2008165845 A1 | 10-07-2008 |
| WO 2010069366 | A1 | 24-06-2010 | EP | 2377320 A1 | 19-10-2011 |
| | | | US | 2011249727 A1 | 13-10-2011 |
| | | | WO | 2010069366 A1 | 24-06-2010 |
| US 6782135 | B1 | 24-08-2004 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **A. GRANGE ; H. ALVESTRAND.** *VP9 bitstream overview draft-grange-vp9-bitstream-00,* 18 February 2013